# EUROPÄISCHE PATENTSCHRIFT

(11) **EP 1 452 747 B1**
(45) Veröffentlichungstag und Bekanntmachung des Hinweises auf die Patenterteilung: **18.04.2007**
(21) Anmeldenummer: 03405129.2
(22) Anmeldetag: 27.02.2003
(51) Int. Cl.: F16B 12/20, A47B 13/02

(54) **Beschlag zum Verbinden zweier Bauteile**
Fitting for connecting two components
Accessoire d'assemblage pour deux éléments de construction

(43) Veröffentlichungstag der Anmeldung: 01.09.2004
(73) Patentinhaber: Meyer, Rudolf, 6373 Ennetbürgen (CH)
(72) Erfinder: Meyer, Rudolf, 6373 Ennetbürgen (CH)
(74) Vertreter: Nückel, Thomas

(56) Entgegenhaltungen:
- DE-A- 19 960 199
- DE-U- 29 517 115
- FR-A- 1 426 294
- FR-A- 2 151 231
- US-A- 5 768 845

## Beschreibung

### Technisches Gebiet

Die Erfindung betrifft einen Beschlag zum Verbinden zweier Bauteile. Bei Möbeln, beispielsweise Tischen oder Regalen, kann es wünschenswert sein, die einzelnen Möbelbauteile lösbar miteinander verbinden zu können. So kann es beispielsweise erforderlich sein, dass die Beine eines Tisches beim Zusammenbauen des Tisches einfach und unkompliziert mit der Tischplatte verbunden und auch von dieser wieder getrennt werden können. Zudem soll für die Herstellung der Verbindung kein Spezialwerkzeug erforderlich sein. Derartige Verbindungen können beispielsweise auch bei Stützen im Innenausbau und im Messemöbelbau erforderlich sein.

### Stand der Technik

Für die Verbindung eines Tischbeins mit einer Tischplatte ist bisher bekannt, auf der Stirnseite des Tischbeins eine Nut einzufräsen. Des weiteren wird auf der Unterseite der Tischplatte an der entsprechenden Stelle eine zweite Nut eingefräst, so dass die beiden Nuten beim Zusammenfügen von Tischbein und Tischplatte zu Deckung kommen. Um nun das Tischbein mit der Tischplatte zu verbinden, wird in die Nut des Tischbeins eine Feder, welche auch als Lamello bezeichnet wird, eingeleimt und anschließend das Tischbein mit der Feder in die entsprechende Nut auf der Unterseite der Tischplatte eingesteckt. Eine derartige Verbindung hat jedoch den Nachteil, dass sie, nachdem der Leim ausgehärtet ist, nicht mehr trennbar ist, ohne die Tischplatte oder das Tischbein zu beschädigen.

Des weiteren ist es bekannt, um den oben genannten Nachteil zu vermeiden, auf der Unterseite der Tischplatte eine Mutter oder eine Muffe mit metrischem Innengewinde mittels einer oder mehrerer Schrauben mit der Tischplatte zu verschrauben. Anschließend wird, sofern das Tischbein nicht bereits als Rohr ausgebildet ist, entlang seiner Längsachse eine Bohrung vorgenommen. Nun wird das Tischbein mit seiner einen Stirnseite an die entsprechende Stelle der Tischplatte gebracht und durch die Bohrung oder den Hohlraum im Tischbein eine Gewindestange geschoben, die in die auf der Unterseite der Tischplatte vorgesehene Mutter geschraubt wird. Die Länge der Gewindestange ist dabei so dimensioniert, dass sie bis zum unteren Ende des Tischbeins reicht. Dort wird sie über eine weitere Mutter und ein entsprechendes Widerlager gespannt. Auf diese Art und Weise erhält man eine lösbare Verbindung zwischen Tischbein und Tischplatte, welche jedoch u. a. den Nachteil hat, dass unter Umständen sehr lange Gewindestangen erforderlich sind, was hohe Kosten für die Verbindung zur Folge hat.

Des Weiteren ist aus dem Stand der Technik FR 2 151 231 ein Beschlag zum Verbinden zweier Möbelteile bekannt. Der Beschlag umfasst einen in das erste Möbelteil einschraubbaren Bolzen, der am aus dem ersten Möbelteil herausragenden Ende eine Nut aufweist. Der Beschlag umfasst zudem eine in das zweite Möbelteil einsetzbare Hülse. Um die beiden Möbelteile miteinander zu verbinden, wird das freie Ende des Bolzens so weit durch eine im zweiten Möbelteil vorgesehene Bohrung und durch eine in der Hülse vorhandene Querbohrung gesteckt bis sich die Nut des Bolzens in der Hülse befindet. Anschliessend wird mittels einer in die Hülse einschraubbaren Klemmschraube der Bolzen festgeklemmt. Um den Bolzen am ersten Möbelteil einschrauben zu können, ist jedoch am ersten Möbelteil eine Bohrung vorzusehen, deren Platzierung vorher genau bestimmt sein muss. Sobald die Bohrung im ersten Möbelteil vorhanden ist, ist allerdings die Montageposition für den Bolzen fest vorgegeben. Zudem sind die durch die Schraubverbindung zwischen dem Bolzen und dem ersten Möbelteil übertragbaren Kräfte und Drehmomente relativ beschränkt. Unter Umständen kann dies zu einer instabilen Verbindung oder gar zum Bruch führen.

### Darstellung der Erfindung

Der Erfindung liegt daher die Aufgabe zu Grunde, einen Beschlag zum Verbinden zweier Bauteile anzugeben, bei dem zum einen die beiden Bauteile ohne weiteres auch wieder voneinander getrennt werden können und bei dem zum anderen der Beschlag weitgehend unabhängig von der Dimensionierung der zu verbindenden Bauteile ist. Insbesondere bei der Verbindung einer Tischplatte mit einem Tischbein soll die Länge des Tischbeins keine Rolle für das Zustandekommen einer soliden Verbindung zwischen Tischbein und Tischplatte spielen.

Die Aufgabe wird durch einen Beschlag zum Verbinden zweier Bauteile mit den Merkmalen gemäß Patentanspruch 1 gelöst.

So weist der erfindungsgemäße Beschlag zum Verbinden zweier Bauteile ein erstes Verbindungselement mit einer Nut auf, welches mit dem ersten Bauteil verbindbar ist. Zudem ist ein zweites Verbindungselement vorgesehen, welches mit dem zweiten Bauteil verbindbar ist und derartig ausgebildet ist, dass es das erste Verbindungselement im Bereich der Nut umschließen kann. Schließlich weist das zweite Verbindungselement ein Klemmelement auf, das im geklemmten Zustand in die Nut ragt.

Vorteilhafte Weiterbildungen der Erfindung ergeben sich aus den in den abhängigen Patentansprüchen angegebenen Merkmalen.

Bei einer Ausführungsform des erfindungsgemäßen Beschlags umfasst das erste Verbindungselement einen runden, die Nut aufweisenden Zapfen. Dies hat den Vorteil, dass auf die Orientierung der beiden Verbindungselemente zueinander nicht geachtet werden muss. Die beiden Verbindungselemente können, auch wenn sie parallel zueinander verdreht sind, ihre Funktion voll umfänglich und ohne Beeinträchtigung erfüllen.

In einer zweiten Ausführungsform des erfindungsgemäßen Beschlags ist die Nut derart ausgebildet, dass sie sich nach innen hin verjüngt. Dies hat den Vorteil, dass abhängig von der Klemmkraft, die zwischen den beiden Verbindungselementen aufgebracht wird, eine einstellbare Spannkraft erzeugt wird, die die beiden zu verbindenden Bauelemente entweder zusammenzieht oder auseinander drückt.

Vorteilhafter Weise verlaufen die beiden Flanken der Nut bei dem erfindungsgemäßen Beschlag aufeinander zu. Dadurch kann erreicht werden, dass je nach dem, auf welche Flanke der Nut die Klemmkraft einwirkt, die beiden zu verbindenden Bauelemente entweder zueinander gezogen oder voneinander weggedrückt werden.

Entsprechend einer bevorzugten Ausführungsvariante verläuft bei dem erfindungsgemäßen Beschlag die Nut entlang des Umfangs des Zapfens. Dadurch wird zusätzlich gewährleistet, dass auch bei einer Verdrehung der beiden Verbindungselemente parallel zueinander deren Funktion nicht beeinträchtigt wird. Dies ist insbesondere dann von Vorteil, wenn die beiden zu verbindenden Bauteile zueinander justiert werden sollen.

Bei einer Weiterbildung des erfindungsgemäßen Beschlags ist die Nut des Zapfens gehärtet. Dadurch wird erreicht, dass der Zapfen im Bereich der Nut beim Klemmen nicht irreversibel verformt wird, was anderenfalls zu einer Beeinträchtigung der Qualität der Verbindung führen könnte.

Darüber hinaus kann das zweite Verbindungselement des erfindungsgemäßen Beschlags eine Hülse aufweisen. Die Hülse umschließt im Bereich der Nut den Zapfen und dient somit zusätzlich als Führungselement zum Ausrichten der beiden Bauteile.

Zur Lösung der Aufgabe wird ferner vorgeschlagen, bei dem Beschlag das Klemmelement als Schraube, insbesondere als Madenschraube auszubilden und die Hülse mit einer ersten Gewindebohrung zur Aufnahme der Schraube zu versehen, wobei die Gewindebohrung derart angeordnet ist, dass die Schraube im klemmenden Zustand mit der ersten Flanke der Nut in Verbindung steht. Über die Schraube kann vorteilhafter Weise die Klemmkraft und damit die Kraft eingestellt werden, mit der die beiden Bauteile miteinander verspannt werden.

Bei einer weiteren Ausführungsform des erfindungsgemäßen Beschlags weist die Hülse eine zweite Gewindebohrung zur Aufnahme der Schraube auf, wobei die zweite Gewindebohrung derart angeordnet ist, dass die Schraube im klemmenden Zustand mit der zweiten Flanke der Nut in Verbindung steht. Vorteilhafter Weise kann über die Schraube die Klemmkraft und damit die Kraft eingestellt werden, mit der die beiden Bauteile auseinandergedrückt werden. Dies ist insbesondere dann von Vorteil, wenn die beiden Bauteile zwischen Decke und Boden verspreizt werden sollen.

Mit dem vorgeschlagenen erfindungsgemäßen Beschlag kann bei Verwendung von zwei Schrauben, wobei über die eine Schraube die Druckkraft und über die andere Schraube die Zugkraft eingestellt wird, auch eine exakte fixe Positionierung der beiden Bauteile zueinander erreicht werden, ohne dass diese sich beispielsweise aufeinander abstützen. Es kann damit sogar eine zwischen den beiden Bauteilen definierte Fuge eingestellt werden, ohne dass es zu einer Beeinträchtigung der Qualität der Verbindung kommt.

Bei einer weiteren Ausführungsform des erfindungsgemäßen Beschlags ist das zweite Verbindungselement derart ausgebildet, dass es im zweiten Bauteil beweglich lagerbar ist. Dies hat den Vorteil, dass ein zusätzlicher Freiheitsgrad bei der Feinjustage der beiden Bauteile erreichbar ist.

Vorteilhafter Weise weist das zweite Verbindungselement eine Lagerplatte auf, die in einer Nut des zweiten Bauelements beweglich lagerbar ist. Auf diese Art und Weise kann die Feinjustage der beiden Bauelemente zueinander auf einfache Art und Weise erfolgen.

Darüber hinaus kann bei dem erfindungsgemäßen Beschlag das zweite Verbindungselement auf seiner vom ersten Verbindungselement abgewandten Seite eine Muffe aufweisen, in welcher eine Mutter in radialer Richtung beweglich gelagert ist. Die Hülse ist mit der Muffe mittels einer Schraube und der Mutter verbunden. Damit wird wiederum eine Feinjustage der beiden Bauteile ermöglicht. Eine solche Ausbildung ist insbesondere dann von Vorteil, wenn im zweiten Bauelement keine Nut für eine Lagerplatte vorsehbar ist.

Die Mutter kann gemäß einem weiteren Merkmal der Erfindung in der Muffe mittels einem elastischen Element vorgespannt sein. Dadurch kann einem Verdrehen der Mutter in der Muffe während des Einschraubens der Schraube in die Mutter entgegengewirkt werden. Das elastische Element dient somit als Verdrehsicherung.

Zur Lösung der Aufgabe wird ferner vorgeschlagen, dass die Muffe des Beschlags als Schraubmuffe ausgebildet ist. Dies hat den Vorteil, dass die Verbindung des zweiten Verbindungselements mit dem zweiten Bauteil schnell und einfach erfolgen kann.

Vorteilhafter Weise weist das erste Verbindungselement des Beschlags eine Montageplatte auf, die mit dem ersten Bauelement beispielsweise durch Schrauben oder Kleben fest verbunden werden kann. Dadurch können vom Verbindungselement höhere Kräfte in das Bauteil eingeleitet und die Kräfteverteilung im Bauteil gleichmäßiger gestaltet werden.

Vorteilhafter Weise wird der Beschlag zur Verbindung von Möbelbauteilen verwendet.

Schließlich kann mit dem erfindungsgemäßen Beschlag auf einfache Art und Weise und kaum sichtbar eine Tischplatte mit einem eckigen oder ovalen Tischbein verbunden werden.

### Kurze Beschreibung der Zeichnungen

Im folgenden wird die Erfindung mit mehreren Ausführungsbeispielen anhand von 19 Figuren weiter erläutert.
- Figur 1: zeigt eine erste Ausführungsform des erfindungsgemäßen Beschlags in der Draufsicht.
- Figur 2: zeigt die erste Ausführungsform des erfindungsgemäßen Beschlags in der Seitenansicht.
- Figur 3: zeigt eine zweite Ausführungsform des erfindungsgemäßen Beschlags in der Draufsicht.
- Figur 4: zeigt die zweite Ausführungsform des erfindungsgemäßen Beschlags in der Seitenansicht.
- Figur 5: zeigt eine dritte Ausführungsform des erfindungsgemäßen Beschlags in der Draufsicht.
- Figur 6: zeigt die dritte Ausführungsform des erfindungsgemäßen Beschlags in der Seitenansicht.
- Figur 7: zeigt eine vierte Ausführungsform des erfindungsgemäßen Beschlags in der Draufsicht.
- Figur 8: zeigt die vierte Ausführungsform des erfindungsgemäßen Beschlags in der Seitenansicht.
- Figur 9: zeigt eine fünfte Ausführungsform des erfindungsgemäßen Beschlags in der Draufsicht.
- Figur 10: zeigt die fünfte Ausführungsform des erfindungsgemäßen Beschlags in der Seitenansicht.
- Figur 11: zeigt die Verwendung des erfindungsgemäßen Beschlags zur Verbindung einer Platte mit einem Vierkantmetallrohr.
- Figur 12: zeigt die dazugehörige Seitenansicht.
- Figur 13: zeigt eine mögliche Ausführungsform der Hülse in der Seitenansicht.
- Figur 14: zeigt die Hülse in der Draufsicht.
- Figur 15: zeigt eine mögliche Ausführungsform des Zapfens in der Seitenansicht.
- Figur 16: zeigt den Zapfen in der Draufsicht.
- Figur 17: zeigt eine mögliche Ausführungsform der Muffe in der Seitenansicht.
- Figur 18: zeigt die Muffe in der Draufsicht.
- Figur 19: zeigt die Muffe mit Mutter und Gummielement im Querschnitt.

### Wege zur Ausführung der Erfindung

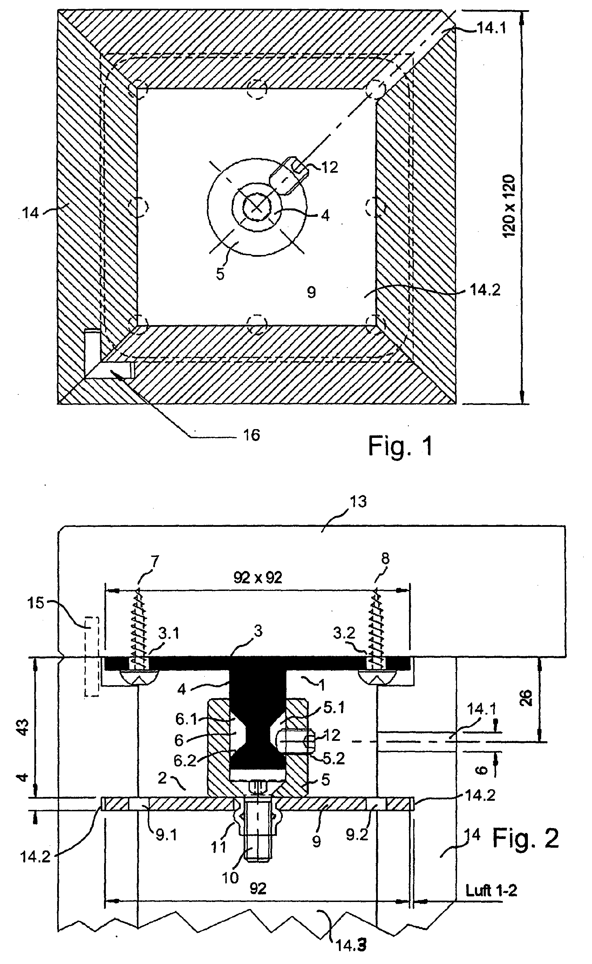

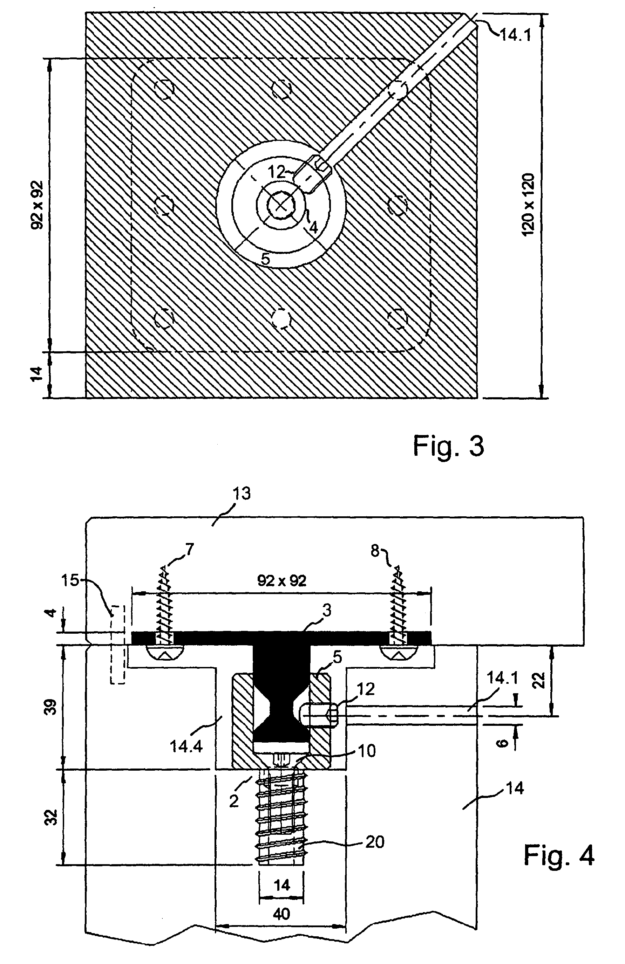

In Figur 1 ist eine erste mögliche Ausführungsform des Beschlags in der Draufsicht gezeigt. Um beispielsweise ein hölzernes Tischbein 14, das einen Hohlraum 14.3 aufweist, mit einer Tischplatte 13 zu verbinden, weist das Tischbein 14, wie in Figur 2 gezeigt, eine radiale Nut 14.2 auf. Bevor das Tischbein 14, welches aus vier einzelnen auf Gehrung geschnittenen Teilen besteht, unter Zuhilfenahme von Eckverbindern 16 verleimt wird, wird eine Lagerplatte 9 in die radiale Nut 14.2 eingesetzt. Die Lagerplatte 9 ist dabei so ausgebildet, dass sie in der radialen Nut 14.2 beweglich gelagert ist. Zur Feinjustage des Tischbeins können die Lagernuten 14.2 als Spiel oder Toleranzausgleich einen gewissen Abstand auf allen Seiten der Lagerplatte 9 aufweisen. Je nach Anwendungsfall und Bedürfnis kann der Abstand ca. 1 - 2 mm betragen. Mit Hilfe des zur Verfügung stehenden Spiels kann später das Tischbein 14 gegenüber der Tischplatte 13 in radialer Richtung exakt positioniert werden. Mit Hilfe des Abstands wird zudem erreicht, dass das Holz des Tischbeins, falls es schwindet, keine Spannungsrisse erleidet. Mit der Lagerplatte 9 ist eine Hülse 5 über eine Schraube 10 und eine in die Lagerplatte 9 eingepresste Mutter 11 verbunden. Die Hülse 5 weist eine Gewindebohrung 5.2 auf, in die eine Schraube, beispielsweise eine Madenschraube 12, einschraubbar ist. Die Madenschraube 12 greift in eine Nut 6 eines Zapfens 4 ein und erzeugt je nach Stellung eine unterschiedlich hohe Klemmkraft. Je weiter die Madenschraube 12 in die Nut 6 hineinragt, desto weiter wird der Zapfen 4 über die Flanke 6.2 der Nut 6 in die Hülse 5 gezogen. Somit lässt sich über die Madenschraube 12 der axiale Abstand bzw. die Spannkraft zwischen dem Tischbein 14 und der Tischplatte 13 einstellen. Der Zapfen 4 ist mit einer Montageplatte 3 verbunden, welche wiederum über Schrauben 7 und 8 mit der Tischplatte 13 verbunden ist. Selbstverständlich können anstelle der Schrauben 7 und 8 auch andere Verbindungselemente verwendet werden, um die Montageplatte 3 mit der Tischplatte 13 zu verbinden. So ist beispielsweise auch eine Klebverbindung vorstellbar. Der Zugang zur Madenschraube 12 erfolgt über eine Bohrung 14.1, welche an der entsprechenden Stelle im Tischbein 14 vorgesehen ist. Über die Bohrung 14.1 lässt sich das entsprechende Werkzeug, beispielsweise ein Schraubenschlüssel oder ein Inbusschlüssel in das Tischbein bis zur Madenschraube 12 einführen. Falls das Tischbein 14 gegenüber der Tischplatte 13 verdrehgesichert werden soll, so kann dies über eine Feder 15, welche in entsprechenden Nuten im Tischbein 14 und der Tischplatte 13 vorgesehen ist, bewerkstelligt werden. Grundsätzlich kann die Lagerplatte 9 den gleichen Aufbau wie die Montageplatte 3 aufweisen. Die in der Montageplatte 3 vorhandenen Löcher 3.1 und 3.2 sind deshalb auch als Bohrungen 9.1 und 9.2 in der Lagerplatte 9 vorhanden.

Die in den beiden Figuren 1 und 2 angegebenen Maße sind lediglich als Dimensionierungsbeispiele zu verstehen. Der erfindungsgemäße Beschlag ist nicht auf diese Maße beschränkt.

Des weiteren ist die Ausführung des Beschlags nicht auf die Verbindung eines Tischbeins mit einer Tischplatte beschränkt, obwohl dies eine durchaus bevorzugte, weil einfach realisierbare Anwendung ist. Der erfindungsgemässe Beschlag kann auch zum Verspannen von Stützen oder zum Verbinden anderer Möbelteile verwendet werden.

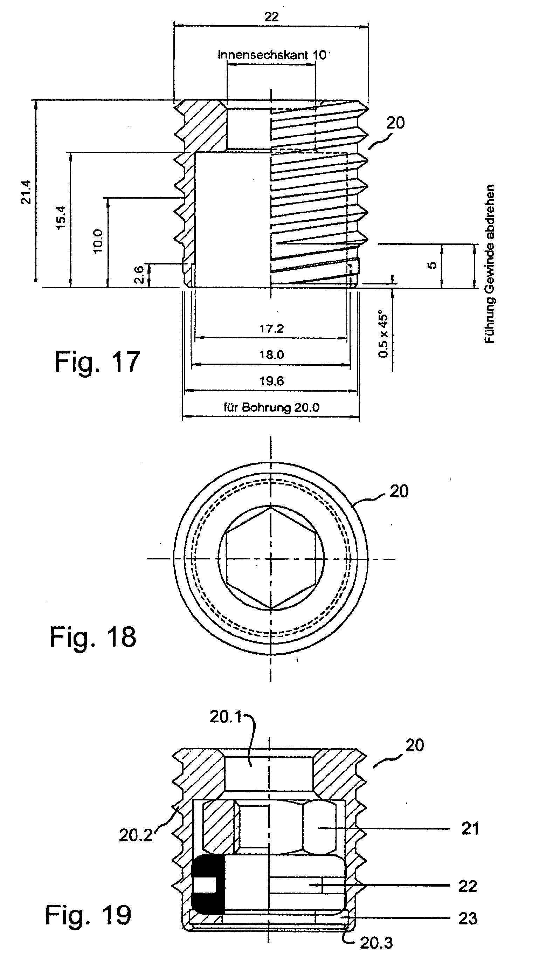

In den Figuren 3 und 4 ist eine zweite Ausführungsform des erfindungsgemäßen Beschlags gezeigt, wobei das Tischbein 14 nunmehr nicht mehr röhrenförmig, sondern massiv ausgebildet ist. Das Tischbein 14 weist in der Ausführungsform gemäß Figur 4 nurmehr im oberen Bereich eine Aussparung 14.4 zur Aufnahme des zweiten Verbindungselements 2 auf. Anstelle der Lagerplatte 9 kommt nun eine Einschraubmuffe 20 zum Einsatz, über die das zweite Verbindungselement fest mit dem Tischbein 14 verbunden ist. Die Hülse 5 ist wiederum über die Schraube 10 mit der Einschraubmuffe 20 verbunden. Eine mögliche Ausführungsform der Einschraubmuffe 20 ist in den Figuren 17 bis 19 gezeigt. Auch bei dieser Ausführungsform ist eine Justage des Tischbeins 14 gegenüber der Tischplatte 13 möglich. Dies geschieht mit Hilfe der gegenüber der Einschreibmuffe 20 verschiebbar gelagerten Hülse 5. Das Verbindungselement 1 hingegen entspricht dem aus den Figuren 1 und 2.

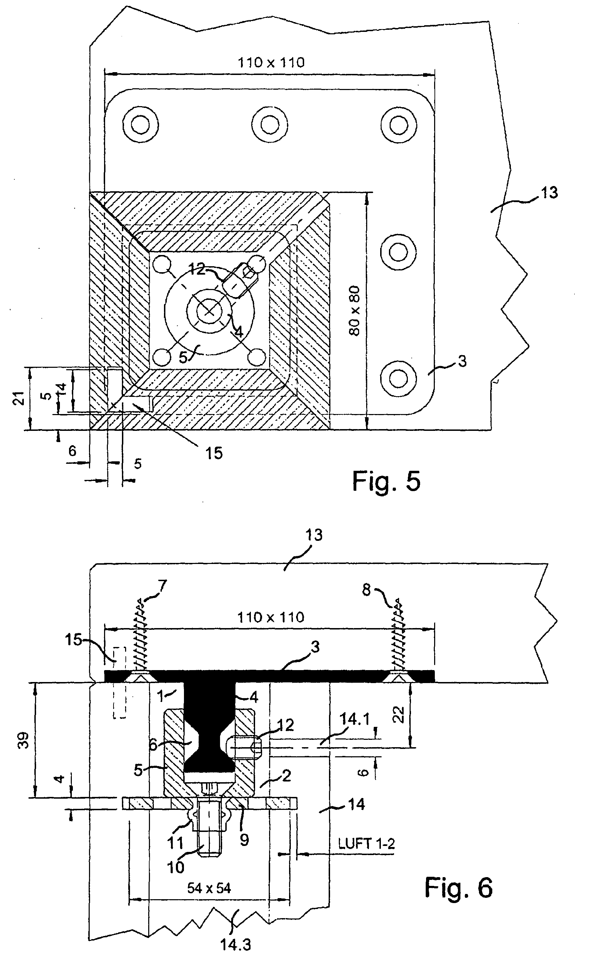

In den Figuren 5 und 6 ist eine dritte Ausführungsform des erfindungsgemäßen Beschlags zum Verbinden zweier Bauteile gezeigt. In der Draufsicht in Figur 5 ist zu erkennen, dass die Montageplatte 3, welche an der Tischplatte 13 unter anderem mittels der Schrauben 7 und 8 befestigt wird, über den Querschnitt des Tischbeins 14 hinausragt. Zudem ist der Zapfen 4 nunmehr exzentrisch auf der Montageplatte 3 angeordnet. Mit Hilfe einer derartigen Ausführungsform des erfindungsgemäßen Beschlags können die zwischen Tischbein und Tischplatte auftretenden Kräfte und Belastungen erhöht werden, ohne dass es zu einem Schaden kommt. Falls erforderlich, kann wie in den Figuren 5 und 6 gezeigt, die Montageplatte 3 in die Tischplatte 13 eingelassen werden.

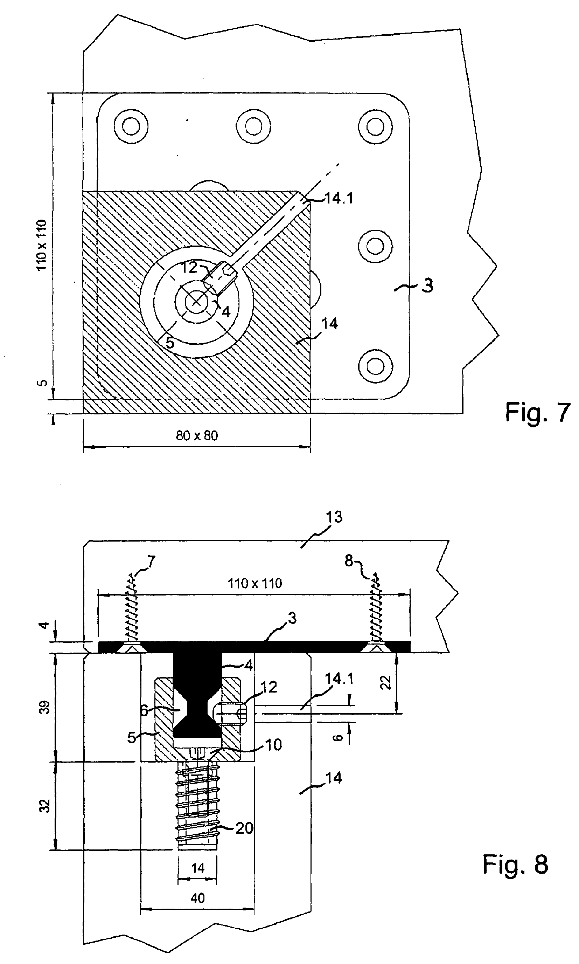

Die in den Figuren 7 und 8 dargestellte vierte Ausführungsform des erfindungsgemäßen Beschlags unterscheidet sich von der dritten Ausführungsform dadurch, dass das massive Tischbein 14 über die Schraubenmuffe 20 mit der Hülse 5 verbunden ist.

Wie aus den Figuren 1 bis 8 zu erkennen ist, können die einzelnen Komponenten des Beschlags untereinander ausgetauscht werden und somit verschiedene Ausführungen zur Befestigung eines Tischbeins an einer Tischplatte realisiert werden.

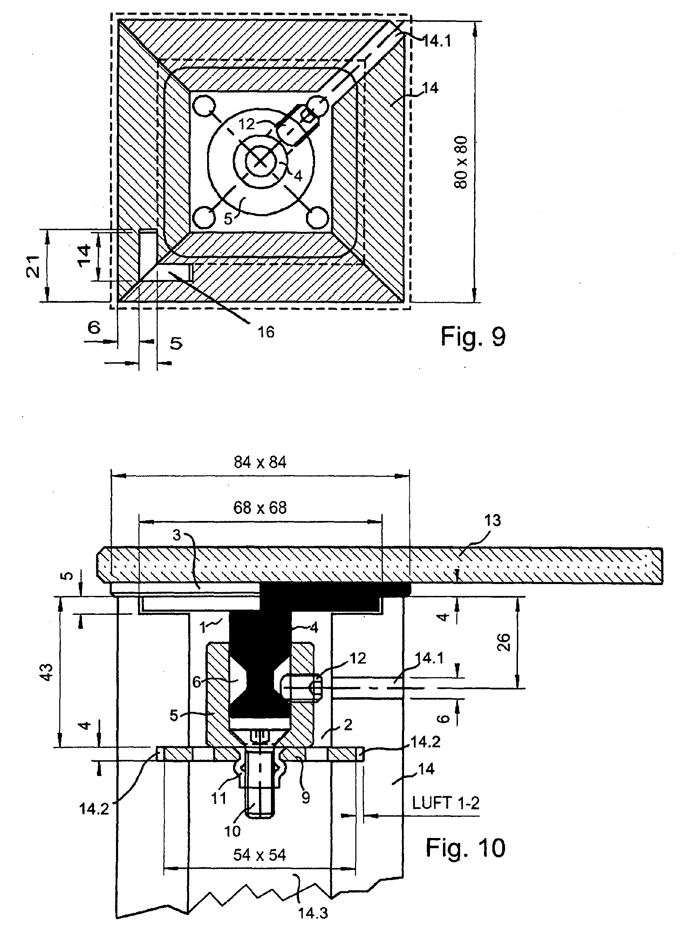

In den Figuren 9 und 10 ist eine fünfte Ausführungsform des erfindungsgemäßen Beschlags dargestellt. Der Beschlag unterscheidet sich von den vorherigen Ausführungsbeispielen dadurch, dass die Montageplatte 3 nunmehr stufig ausgebildet ist. Das Tischbein 14 stützt sich nunmehr nicht mehr an der Tischplatte 13, sondern an der Montageplatte 3 ab.

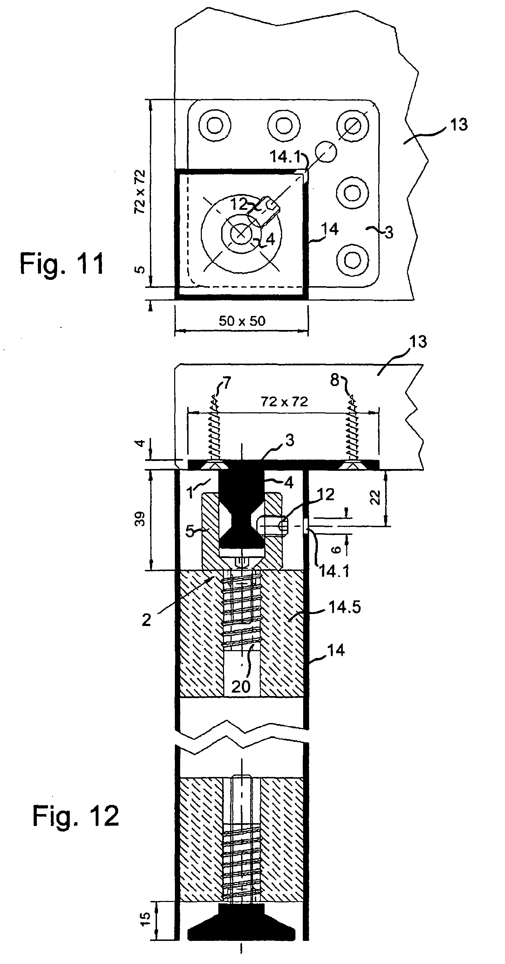

Anstelle eines hölzernen Tischbeins kann auch, wie in den Figuren 11 und 12 gezeigt ist, das Tischbein 14 als Rohr, beispielsweise aus Metall, ausgebildet sein. Im Inneren des Rohrs ist ein Lagerklotz 14.5 fest angebracht, in den die Muffe 20 einschraubbar ist.

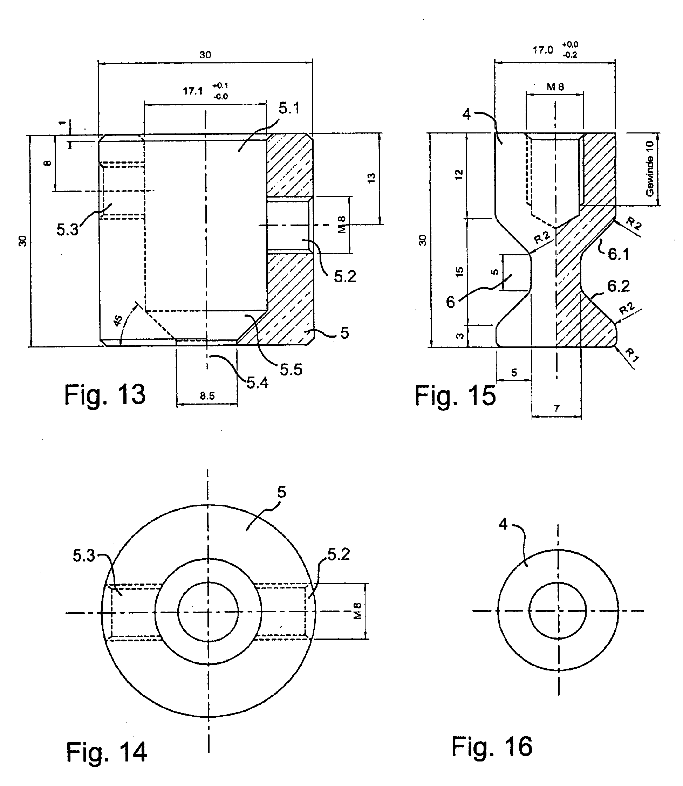

Der erfindungsgemäße Beschlag zum Verbinden zweier Bauteile ist somit nicht auf das Verbinden zweier Holzteile beschränkt, sondern kann auch für die Verbindung von Bauteilen aus verschiedenen Materialien, wie beispielsweise Metall, verwendet werden. Die Hülse 5, die in Figur 13 im Querschnitt gezeigt ist, weist eine erste Gewindebohrung 5.2 und eine zweite Gewindebohrung 5.3 auf, wobei die beiden Gewindebohrungen 5.2 und 5.3 axial zueinander versetzt sind. Aus Platzgründen kann es hilfreich sein, die beiden Gewindebohrungen 5.2 und 5.3 auch lateral zueinander zu versetzen, wie aus den Figuren 13 und 14 ersichtlich ist. Falls die zu verbindenden Bauteile zusammengezogen werden sollen, ist die Gewindebohrung 5.2 der Hülse 5 zu verwenden. Wird der in Figur 15 im Querschnitt dargestellte Zapfen 4 in das Innere 5.1 der Hülse 5 eingeführt und ragt eine Schraube in die Nut 6 des Zapfens 4, so trifft das Schraubenende bei Verwendung der Gewindebohrung 5.2 auf die Flanke 6.2 des Zapfens 4 und treibt diesen weiter in Richtung Hülsenboden 5.5. Wird hingegen die Gewindebohrung 5.3 verwendet, so führt das Eindrehen einer Schraube in die Gewindebohrung 5.3 dazu, dass die Schraube die Flanke 6.1 der Nut 6 aus dem Inneren 5.1 der Hülse 5 herausdrückt. Diese Funktion kann dann von Vorteil sein, wenn die beiden zu verbindenden Bauteile beispielsweise gegenüber einer Decke und einem Boden verspannt werden sollen, wie dies bei einer Stütze der Fall sein kann.

Figur 16 zeigt den Zapfen 4 in der Draufsicht.

In Figur 17 ist eine mögliche Ausführungsform einer Schraubmuffe 20 im Längsschnitt gezeigt. Im Inneren 20.1 der Muffe 20 ist eine Mutter 21, eine Gummischeibe 22 und eine Tellerfeder 23 angeordnet. Um zu verhindern, dass die Mutter 21, die Gummischeibe 22 und die Tellerfeder 23 aus der Muffe 20 fallen können, kann diese nach dem Einsetzen der drei Bauteile mechanisch so verformt werden, dass eine Wulst 20.3 entsteht, die die Teile am Herausfallen hindert. Die Mutter 21 ist in radialer Richtung innerhalb der Muffe 20 verschiebbar. Dadurch kann die mit der Mutter 21 über die Schraube 10 verbundene Hülse 5 ebenfalls in radialer Richtung verschoben werden. Dies wiederum hat zur Folge, dass das Bauteil, das mit der Muffe 20 verbunden ist, ebenfalls in radialer Richtung verschiebbar ist und damit gegenüber dem anderen Bauteil justiert werden kann.

Die vorhergehende Beschreibung der Ausführungsbeispiele gemäß der vorliegenden Erfindung dient nur zu illustrativen Zwecken und nicht zum Zwecke der Beschränkung der Erfindung. Im Rahmen der Erfindung sind verschiedene Änderungen und Modifikationen möglich, ohne den Umfang der Erfindung sowie ihre Äquivalente zu verlassen.

### Bezugszeichenliste

- 1: erstes Verbindungselement
- 2: zweites Verbindungselement
- 3: Montageplatte
- 3.1: erste Bohrung
- 3.2: zweite Bohrung
- 4: Zapfen
- 5: Hülse
- 5.1: Innenbereich der Hülse
- 5.2: erste Gewindebohrung
- 5.3: zweite Gewindebohrung
- 5.4: Längsachse der Hülse
- 5.5: Bodenbereich der Hülse
- 6: Nut
- 6.1: erste Flanke der Nut
- 6.2: zweite Flanke der Nut
- 7: erste Schraube
- 8: zweite Schraube
- 9: Lagerplatte
- 9.1: Bohrung
- 9.2: Bohrung
- 10: Schraube
- 11: Einpressmutter
- 12: Madenschraube
- 13: Tischplatte
- 14: Tischbein
- 14.1: Bohrung
- 14.2: Nut
- 14.3: Hohlraum im Tischbein
- 14.5: Lagerklotz
- 15: Feder
- 16: Eckverbinder
- 20: Muffe
- 20.1: Innenbereich der Muffe
- 20.2: Aussengewinde der Muffe
- 21: Mutter
- 22: Gummielement
- 23: Tellerfeder

## Patentansprüche

1. Beschlag zum Verbinden zweier Bauteile,
mit einem ersten Verbindungselement (1), welches eine Nut (6) und eine Montageplatte (3) aufweist, über die es mit dem ersten Bauteil (13) verbindbar ist,
mit einem zweiten Verbindungselement (2), welches mit dem zweiten Bauteil (14) verbindbar ist und derart ausgebildet ist, dass es das erste Verbindungselement (1) im Bereich der Nut (6) umschliessen kann, und
bei dem das zweite Verbindungselement (2) ein Klemmelement (12) aufweist, das im klemmenden Zustand in die Nut (6) ragt.

2. Beschlag nach Patentanspruch 1,
bei dem das erste Verbindungselement (1) einen runden, die Nut (6) aufweisenden Zapfen (4) umfasst.

3. Beschlag nach Patentanspruch 1 oder 2,
bei dem sich die Nut (6) nach innen hin verjüngt.

4. Beschlag nach einem der Patentansprüche 1 bis 3,
bei dem beide Flanken (6.1, 6.2) der Nut (6) aufeinander zulaufen.

5. Beschlag nach einem der Patentansprüche 2 bis 4,
bei dem die Nut (6) entlang des Umfangs des Zapfens (4) verläuft.

6. Beschlag nach einem der Patentansprüche 2 bis 5,
bei dem die Nut (6) des Zapfens (4) gehärtet ist.

7. Beschlag nach einem der Patentansprüche 1 bis 6,
bei dem das zweite Verbindungselement (2) eine Hülse (5) aufweist.

8. Beschlag nach Patentanspruch 7,
bei dem das Klemmelement (12) eine Schraube, insbesondere eine Madenschraube, aufweist und
bei dem die Hülse (5) eine erste Gewindebohrung (5.2) zur Aufnahme der Schraube aufweist, wobei die Gewindebohrung (5.2) derart angeordnet ist, dass die Schraube im klemmenden Zustand mit der ersten Flanke (6.2) der Nut (6) in Verbindung steht.

9. Beschlag nach Patentanspruch 8,
bei dem die Hülse (5) eine zweite Gewindebohrung (5.3) zur Aufnahme der Schraube aufweist, wobei die zweite Gewindebohrung (5.3) derart angeordnet ist, dass die Schraube im klemmenden Zustand mit der zweiten Flanke (6.1) der Nut (6) in Verbindung steht.

10. Beschlag nach einem der Patentansprüche 7 bis 9,
bei dem das zweite Verbindungselement (2) derart ausgebildet ist, dass es im zweiten Bauteil (14) quer zur Längsachse (5.4) der Hülse (5) beweglich lagerbar ist.

11. Beschlag nach einem der Patentansprüche 1 bis 10,
bei dem das zweite Verbindungselement (2) eine Lagerplatte (9) aufweist, die in einer Lagernut (14.2) des zweiten Bauelements (14) beweglich lagerbar ist.

12. Beschlag nach einem der Patentansprüche 7 bis 10,
bei dem das zweite Verbindungselement (2) auf seiner vom ersten Verbindungselement (1) abgewandten Seite eine Muffe (20) aufweist, in welcher eine Mutter (21) in radialer Richtung beweglich gelagert ist,
wobei die Hülse (5) mit der Muffe (20) mittels einer Schraube (10) und der Mutter (21) verbunden ist.

13. Beschlag nach Patentanspruch 12,
bei dem die Mutter (21) in der Muffe (20) mittels einem elastischen Element (22, 23) vorgespannt ist.

14. Beschlag nach einem der Patentansprüche 12 oder 13,
bei dem die Muffe (20) eine Schraubmuffe ist.

15. Beschlag nach einem der Patentansprüche 1 bis 14,
bei dem das erste Verbindungselement (1) eine Montageplatte (3) aufweist, die mit dem ersten Bauelement (13) fest verbunden werden kann.

16. Verwendung des Beschlags nach einem der Patentansprüche 1 bis 15,
zur Verbindung von Möbelbauteilen.

17. Verwendung des Beschlags nach einem der Patentansprüche 1 bis 16,
zur Verbindung einer Tischplatte (13) mit einem eckigen oder ovalen Tischbein (14).

## Claims

1. Fitting for connecting two components,
with a first connecting element (1), which has a groove (6) and a mounting plate (3) via which the first connecting element (1) can be connected to the first component (13),
with a second connecting element (2), which can be connected to the second component (14), and which is developed in such a way that it can surround the first connecting element (1) in the area of the groove (6), and
wherein the second connecting element (2) has a clamping element (12), which projects into the groove (6) in a clamping state.

2. Fitting according to claim 1,
wherein the first connecting element (1) comprises a round pin (4) having the groove (6).

3. Fitting according to claim 1 or 2,
wherein the groove (6) tapers inwards.

4. Fitting according to one of the claims 1 to 3,
wherein both flanks (6.1, 6.2) of the groove (6) converge.

5. Fitting according to one of the claims 2 to 4,
wherein the groove (6) runs along the circumference of the pin (4).

6. Fitting according to one of the claims 2 to 5,
wherein the groove (6) of the pin (4) is hardened.

7. Fitting according to one of the claims 1 to 6,
wherein the second connecting element (2) has a bush (5).

8. Fitting according to the claim 7,
wherein the clamping element (12) has a screw, in particular a headless screw, and
wherein the bush (5) has a first threaded hole (5.2) for receiving the screw, whereby the threaded hole (5.2) is arranged in such a way that the screw remains connected to the first flank (6.2) of the groove (6) in a clamping state.

9. Fitting according to the claim 8,
wherein the bush (5) has a second threaded hole (5.3) for receiving the screw, whereby the second threaded hole (5.3) is arranged in such a way that the screw remains connected to the second flank (6.1) of the groove (6) in a clamping state.

10. Fitting according to one of the claims 7 to 9,
wherein the second connecting element (2) is developed in such a way that it can be lodged as to be movable in the second component (14), cross-wise to the longitudinal axis (5.4) of the bush (5).

11. Fitting according to one of the claims 1 to 10,
wherein the second connecting element (2) has a bearing plate (9), which can be lodged as to be movable in a bearing groove (14.2) of the second component (14).

12. Fitting according to one of the claims 7 to 10,
wherein the second connecting element (1) has a sleeve (20) on its side opposite to the first connecting element (1), in which a screw nut (21) is lodged as to be movable into the radial direction, whereby the bush (5) is connected to the sleeve (20) by means of a screw (10) and of the screw nut (21).

13. Fitting according to the claim 12,
wherein the screw nut (21) is pre-clamped in the sleeve (20) by means of an elastic element (22, 23).

14. Fitting according to one of the claims 12 or 13,
wherein the sleeve (20) is a screw socket.

15. Fitting according to one of the claims 1 to 14,
wherein the first connecting element (1) has a mounting plate (3), which can be permanently connected to the first structural member (13).

16. Use of the fitting according to one of the claims 1 to 15,
for connecting furniture components.

17. Use of the fitting according to one of the claims 1 to 16,
for connecting a table top (13) to an angular or oval table leg (14).

## Revendications

1. Armature pour l'assemblage de deux éléments constitutifs,
avec un premier élément d'assemblage (1), lequel présente une rainure (6) et une plaque de montage (3), grâce à laquelle ce premier élément d'assemblage (1) est susceptible d'être relié avec le premier élément constitutif (13),
avec un deuxième élément d'assemblage (2), lequel est susceptible d'être relié avec le deuxième élément constitutif (14) et qui est formé de telle sorte qu'il peut entourer le premier élément d'assemblage (1) dans la zone de la rainure (6), et
dans lequel le deuxième élément d'assemblage (2) présente un élément de serrage (12), lequel pénètre dans la rainure (6) à l'état serré.

2. Armature selon la revendication 1,
dans lequel le premier élément d'assemblage (1) comprend une cheville (4) ronde qui présente la rainure (6).

3. Armature selon la revendication 1 ou 2,
dans lequel la rainure (6) s'amincie vers l'intérieur.

4. Armature selon une des revendications de 1 à 3,
dans lequel les deux flancs (6.1, 6.2) de la rainure (6) convergent l'un vers l'autre.

5. Armature selon une des revendications de 2 à 4,
dans lequel la rainure (6) passe en suivant le long de la circonférence de la cheville (4).

6. Armature selon une des revendications de 2 à 5,
dans lequel la rainure (6) de la cheville (4) est durcie.

7. Armature selon une des revendications de 1 à 6,
dans lequel le deuxième élément d'assemblage (2) présente une douille (5).

8. Armature selon la revendication 7,
dans lequel l'élément de serrage (12) présente une vis, en particulier une vis sans tête et
dans lequel la douille (5) présente un premier trou taraudé (5.2) pour le logement de la vis, auquel cas le trou taraudé (5.2) est agencé de telle sorte que la vis est en contact avec le premier flanc (6.2) de la rainure (6) à l'état serré.

9. Armature selon la revendication 8,
dans lequel la douille (5) présente un deuxième trou taraudé (5.3) pour le logement de la vis, auquel cas le deuxième trou taraudé est agencé de telle sorte que la vis est en contact avec le deuxième flanc (6.1) de la rainure (6) à l'état serré.

10. Armature selon une des revendications de 7 à 9,
dans lequel le deuxième élément d'assemblage (2) est formé de telle sorte qu'il puisse être logé de façon à être mobile dans le deuxième élément constitutif (14), obliquement par rapport à l'axe longitudinal (5.4) de la douille (5).

11. Armature selon une des revendications de 1 à 10,
dans lequel le deuxième élément d'assemblage (2) présente une plaque d'appui (9) qui est susceptible de pouvoir être logée de façon à être mobile dans une rainure de logement (14.2) du deuxième élément constitutif (14).

12. Armature selon une des revendications de 7 à 10,
dans lequel le deuxième élément d'assemblage (2) présente, sur son côté opposé au premier élément d'assemblage (1), un manchon (20), dans lequel un écrou (21) est logé de façon à être mobile en direction radiale,
auquel cas la douille (5) est reliée avec le manchon (20) à l'aide d'une vis (10) et de l'écrou (21).

13. Armature selon la revendication 12,
dans lequel l'écrou (21) est précontraint dans le manchon (20) à l'aide d'un élément élastique (22, 23).

14. Armature selon une des revendications 12 ou 13,
dans lequel le manchon (20) est un joint à manchons filetés.

15. Armature selon une des revendications de 1 à 14,
dans lequel le premier élément d'assemblage (1) présente une plaque de montage (3) qui peut être reliée de façon inamovible avec le premier élément de construction (13).

16. Utilisation de l'armature selon une des revendications de 1 à 15,
pour l'assemblage d'éléments constitutifs de meubles.

17. Utilisation de l'armature selon une des revendications de 1 à 16,
pour l'assemblage d'un dessus de table (13) avec un pied de table (14) polygonal ou ovale.
